Europäisches Patentamt

European Patent Office

Office européen des brevets

(11) Veröffentlichungsnummer: **0 248 454**
**A1**

(12) **EUROPÄISCHE PATENTANMELDUNG**

(21) Anmeldenummer: 87200014.6

(22) Anmeldetag: 07.01.87

(51) Int. Cl.⁴: **B01D 12/00**

Die Bezeichnung der Erfindung wurde geändert (Richtlinien für die Prüfung im EPA, A-III, 7.3).

(30) Priorität: 14.01.86 DE 3600778

(43) Veröffentlichungstag der Anmeldung:
09.12.87 Patentblatt 87/50

(84) Benannte Vertragsstaaten:
AT BE CH DE ES FR GB GR IT LI LU NL SE

(71) Anmelder: **POLYGRAM GmbH**
**Glockengiesserwall 3**
**D-2000 Hamburg 1(DE)**

(84) **DE**

(71) Anmelder: **Polygram International Holding B.V.**
**Gerrit van der Veenlaan 4**
**NL-3743 DN Baarn(NL)**

(84) **BE CH ES FR GB GR IT LI LU NL SE AT**

(72) Erfinder: **Koop, Hermann, Dr.**
**Bachstelzenweg 1**
**D-3003 Sonnenberg 1(DE)**
Erfinder: **Thein, Friedrich Wilhelm**
**Im Blenze 27**
**D-3050 Wunstorf 1(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) Verfahren zum Auffüllen mit Behandlungsflüssigkeiten und/oder deren Aufbereitung.

(57) Die Erfindung bezieht sich auf ein Verfahren zum Auffüllen und/oder Aufbereiten von wasserverdrängenden Behandlungsflüssigkeiten oder von Gemischen aus solchen und aus wasseraufnehmenden Flüssigkeiten. Die Flüssigkeiten befinden sich dabei in Behandlungskammern und dienen dem Entfernen von Wasser, das Oberflächen von in die Behandlungsflüssigkeiten einzutauchenden Gegenständen anhaftet. Die Gegenstände können dabei z. B. aus Glas, Keramik, Nickel, Kupfer, rostfreiem Stahl oder Kunststoff, wie beispielsweise plattenförmige Informationsträger, bestehen.

FIG.1

## Verfahren zum Auffüllen und/oder Aufbereiten von Behandlungsflüssigkeiten

Die Erfindung bezieht sich auf ein Verfahren zum Auffüllen und/oder Aufbereiten von wasserverdrängenden Behandlungsflüssigkeiten oder von Gemischen aus solchen und aus wasseraufnehmenden Flüssigkeiten in Behandlungskammern zum Entfernen von Wasser, das Oberflächen von in die Behandlungsflüssigkeiten einzutauchenden Gegenständen aus Glas, Keramik, Nickel, Kupfer, rostfreiem Stahl oder Kunststoff, wie beispielsweise plattenförmige Informationsträger, anhaftet.

In der Technik besteht ein Bedarf an Verfahren zum Entfernen von Flüssigkeiten von Gegenständen, deren Oberflächen mit diesen Flüssigkeiten verunreinigt sind. So muß beispielsweise von plattenförmigen Informationsträgern, die optisch ausgelesen werden, wie beispielsweise Compact-Discs nach deren Reinigung mit Wasser dieses wieder entfernt werden. Ähnliches gilt auch für Silizium-Platten, Kupfer-und Glasteile, die in elektrischen Schaltungen eingesetzt werden. Beim Trocknen derartiger Gegenstände ist es in jedem Falle wichtig, diese so zu trocknen, daß auf deren Oberflächen keine sich als Trockenflecke äußernden Niederschlagsreste zurückbleiben. Außerdem ist zu berücksichtigen, daß beim Trocknen bestimmte Temperaturen nicht überschritten werden dürfen, damit die zu trocknenden Gegenstände mechanisch, chemisch und thermisch nicht angegriffen werden. So sollte z. B. beim Trocknen von plattenförmigen Informationsträgern, wie z. B. Compact-Discs, eine Temperatur von 90°C nicht überschritten werden. Ferner kommt es beim Trocknen darauf an, daß die zu trocknenden Gegenstände nicht durch in der Behandlungsflüssigkeit schwebende Teilchen verunreinigt werden. Es müssen also besonders hochwertige, d. h. hochreine Behandlungsflüssigkeiten eingesetzt werden.

Aus der DE-OS 23 01 357 ist ein Verfahren und eine Vorrichtung zur Entfernung von Flüssigkeiten von festen Oberflächen bekannt, gemäß dem ein Gegenstand mit einer durch eine Flüssigkeit verunreinigten Oberfläche in ein Lösungsmittelbad eingetaucht wird, das eine andere Dichte als die Flüssigkeit besitzt. Das Lösungsmittel wird in eine heftige Bewegung versetzt, wodurch die Flüssigkeit von dem Gegenstand verdrängt wird. Die verdrängte Flüssigkeit und das Lösungsmittel werden aus dem Bad abgeführt und das Lösungsmittel nach Trennung von der Flüssigkeit wieder dem Lösungsmittelbad zurückgeführt. Dieses Verfahren erfordert ein hochreines Lösungsmittel, welches sehr teuer ist. Darüber hinaus muß das Lösungsmittel bei hohen Anforderungen an dessen Reinheit in sehr kurzen Abständen erneuert werden, was dieses Verfahren zum Entfernen von Flüssigkeiten unwirtschaftlich macht.

Aus der DE-OS 31 25 890 ist ferner ein Verfahren zum Herstellen von Trägern mit hoher Informationsdichte bekannt, bei dem zunächst Verunreinigungen von der Oberfläche mit einem wässrigen Spülmittel entfernt werden, das dann durch Spülen mit flüssigem Fluor-Kohlenwasserstoff wieder von den Trägern entfernt wird. Anschließend bleibt der Träger in Fluor-Kohlenwasserstoffdampf, bis die Trägertemperatur die Dampftemperatur erreicht hat. Auch für dieses Verfahren gilt, daß der flüssige Fluor-Kohlenwasserstoff hochrein sein muß, jedoch durch das Spülen der Platten verschmutzt und deshalb häufig erneuert werden muß.

Aus der DE-OS 20 08 468 ist ein Verfahren zur Entfernung von Wasser aus einem nicht-absorbierenden Gegenstand bekannt, bei dem in einem Siedebecken entwickelte Lösungsmitteldämpfe an einem Kühlmantel kondensieren. Das kondensierte Lösungsmittel wird in einem Trog aufgefangen und über eine durch ein Ventil kontrollierte Leitung einem Trockner zugeführt. Wie dieser Trockner genau aussieht, ist in der DE-OS nicht näher beschrieben. Von dem Trockner aus wird das Lösungsmittelkondensat über eine Leitung, in der wiederum ein Ventil vorgesehen ist, einem Vorratsbehälter zugeführt. Mittels eine Pumpe wird das Lösungsmittel dann durch eine weitere Leitung einem Entwässerungsbecken zugeführt, in dem Lösungsmittel steht, in das die Gegenstände eingetaucht werden. Dieses Verfahren erfordert also einen recht hohen Aufwand. Darüber hinaus existiert das Problem der Temperatureinstellung des in dem Entwässerungsbecken befindlichen Lösungsmittels. Ist dessen Temperatur unterhalb des Taupunktes der Luftfeuchtigkeit, sammelt sich in dem Lösungsmittel Wasser an, das nur durch aufwendige Verfahren, die in der DE-OS nicht näher angegeben sind, abgetrennt werden kann. Ist die Temperatur des Lösungsmittels dagegen oberhalb des Taupunktes der Luft, treten hohe Lösungsmittelverluste ein. Das Hauptproblem, nämlich die Entfernung des Wassers aus dem Lösungsmittel, ist in der DE-OS nicht näher behandelt.

Es ist Aufgabe der Erfindung, ein Verfahren zum Auffüllen und/oder Aufbereiten von wasserverdrängenden oder wasseraufnehmenden Behandlungsflüssigkeiten anzugeben, das auf einfache Weise einen wirtschaftlichen Einsatz von Lösungsmittel ermöglicht und bei dem auf das vorherige Aufbereiten und Bevorraten von absolut reinen Behandlungsflüssigkeiten verzichtet werden kann.

Diese Aufgabe wird erfindungsgemäß dadurch gelöst, daß die Oberflächen der in den Kammern befindlichen Behandlungsflüssigkeiten auf einer derartigen Temperatur gehalten werden, daß eine oberhalb dieser Oberflächen befindliche, in die Dampfphase übergeführte Behandlungsflüssigkeit der gleichen Art an den Oberflächen kondensiert und den Kammern auf diese Weise laufend aufbereitete, wasserarme Behandlungsflüssigkeit zugeführt wird.

Ein solches Verfahren zum Auffüllen und/oder Aufbereiten von wasserverdrängenden oder wasseraufnehmenden Behandlungsflüssigkeiten oder Gemischen aus solchen Flüssigkeiten bietet den Vorteil, daß die in den Behandlungskammern befindlichen Behandlungsflüssigkeiten mit einer Flüssigkeit der gleichen Art, die sich jedoch in der Dampfphase befindet und an den Oberflächen der in den Kammern im flüssigen Zustand befindlichen Behandlungsflüssigkeiten kondensiert, ständig nachgefüllt werden. Dadurch, daß die Behandlungsflüssigkeiten zunächst in die Dampfphase übergeführt werden und erst anschließend nach deren Kondensation in flüssiger Form als Behandlungsflüssigkeit eingesetzt werden, ist eine zwangsläufige Reinigung der Behandlungsflüssigkeiten gegeben, da diese durch die Überführung in die Dampfphase feste Verschmutzungspartikel nicht mit sich führen können. Auch ist durch die Überführung des Lösungsmittels in die Dampfphase sichergestellt, daß in die Behandlungskammern nur wasserarme Behandlungsflüssigkeit gelangt. Diese Vorteile sind sowohl beim Auffüllen, d. h. also beim Erst-Befüllen der Behandlungskammer, wie auch für das laufende Regenerieren der Flüssigkeiten aus den Behandlungskammern von Vorteil. Für das laufende Regenerieren der in den Behandlungskammern befindlichen Behandlungsflüssigkeiten werden diese wieder aus der Kammer abgeführt, in die Dampfphase übergeführt und wieder an den Oberflächen der in den Kammern befindlichen Flüssigkeit kondensiert. Auf diese Weise durchlaufen die Behandlungsflüssigkeiten also immer wieder einen Prozeß, indem sie in die Dampfphase übergeführt werden und auf diese Weise gereinigt und von Wasser befreit werden. Damit ist dieses Verfahren wirtschaftlich einsetzbar und schafft darüber hinaus einen hohen Reinheitsgrad der Behandlungsflüssigkeiten.

Gegenüber den nach dem Stand der Technik bekannten Verfahren bietet das vorliegende insbesondere den Vorteil, daß sich in den Behandlungskammern keine Emulsion aus den Behandlungsflüssigkeiten und Wasser bildet. Solche Emulsionen lassen sich nämlich kaum wieder in ihre Bestandteile trennen, d. h. es ist nur sehr schwer möglich, das Wasser wieder abzutrennen. Emulsionen in den Behandlungskammern müssen aus mehreren Gründen vermieden werden. Zum einen führen Emulsionen, da sie Wasser enthalten zu Korrosion an den Behandlungskammern. Zum zweiten führt das in der Emulsion enthaltende Wasser zu Flecken auf den eingetauchten Gegenständen (Trennungsprobleme im Wasserscheider).

Das erfindungsgemäße Verfahren ist sowohl für Behandlungsflüssigkeiten anwendbar, welche auch wasserverdrängend wirken, wie auch auf Gemische aus solchen und Wasser aufnehmenden Flüssigkeiten.

Die Wahl der Temperaturen der in den Kammern befindlichen Behandlungsflüssigkeiten hängt sowohl von der Art der Zusammensetzung der Behandlungsflüssigkeiten wie auch von dem Material und der Beschaffenheit der zu behandelnden Gegenstände ab. Die Temperatur der Behandlungsflüssigkeiten hat Einfluß darauf, wie viel in der Dampfphase befindliche Behandlungsflüssigkeit an den Oberflächen der in den Kammern befindlichen Behandlungsflüssigkeit kondensiert. In jedem Falle muß aber die Temperatur der in den Kammern befindlichen Behandlungsflüssigkeiten unter den Verdampfungstemperaturen der Flüssigkeiten gehalten werden, damit eine oberhalb dieser Oberflächen befindliche, in die Dampfphase übergeführte Behandlungsflüssigkeit der gleichen Art an den Oberflächen kondensiert.

Das Verfahren gestattet es also, auf einfache Weise Behandlungsflüssigkeiten so aufzubereiten, daß sie hochrein sind und sich so auch für das Entfernen von Wasser von Oberflächen solcher Gegenstände eignen, die bezüglich der Verunreinigung ihrer Oberflächen sehr sensibel sind. Auch für die Erst-Befüllung der Anlage müssen keine hochreinen Flüssigkeiten eingesetzt werden. Das Verfahren bietet darüber hinaus den Vorteil, daß zu seiner Durchführung keine aufwendigen Vorrichtungen erforderlich sind.

Nach einer weiteren Ausgestaltung der Erfindung ist vorgesehen, daß an den Oberflächen kondensierende dampfförmige Behandlungsflüssigkeit mittels einer Verdampfungskammer durch Erhitzen in die Dampfphase übergeführt wird.

Die Behandlungsflüssigkeiten können in einer Verdampfungskammer durch einfaches Erhitzen in die Dampfphase übergeführt werden. Dieser Verdampfungskammer kann dafür sowohl aus den Behandlungskammern zurückgeführte Behandlungsflüssigkeit wie auch neue, noch nicht benutzte Behandlungsflüssigkeit zugeführt werden. Die Verdampfungskammer muß dabei so angeordnet sein, daß die verdampfte Behandlungsflüssigkeit den Oberflächen der in den Behandlungskammern befindlichen Behandlungsflüssigkeiten zugeführt wird, so daß der Dampf an deren Oberflächen kondensiert.

Nach einer weiteren Ausgestaltung der Erfindung ist vorgesehen, daß die Oberflächentemperatur der in den Kammern befindlichen Behandlungsflüssigkeiten unterhalb deren Verdampfungstemperatur und oberhalb des Taupunktes der Luftfeuchtigkeit gehalten wird.

Liegt die Oberflächentemperatur der in den Kammern befindlichen Behandlungsflüssigkeiten oberhalb des Taupunktes der Luftfeuchtigkeit, ist sichergestellt, daß sich an diesen Oberflächen keine Luftfeuchtigkeit niederschlägt. Dies ist aus den oben erwähnten Gründen von besonderer Bedeutung, da den Kammern selbstverständlich möglichst wenig Wasser zusammen mit der Behandlungsflüssigkeit zugeführt werden soll und insbesondere auch die Bildung von Emulsionen vermieden werden soll.

Nach einer weiteren Ausgestaltung der Erfindung ist vorgesehen, daß die in den Behandlungskammern befindlichen Behandlungsflüssigkeiten auf einer Temperatur von 7°C bis 15°C unterhalb ihres Siedepunktes gehalten wird. Es hat sich gezeigt, daß eine Einhaltung dieses Temperaturbereiches von Vorteil ist. Dies gilt insbesondere dann, wenn als Behandlungsflüssigkeit ein Gemisch aus Fluor-Kohlenwasserstoff und Alkohol eingesetzt wird.

Nach einer weiteren Ausgestaltung der Erfindung ist vorgesehen, daß die Oberflächentemperatur der in den Kammern befindlichen Behandlungsflüssigkeiten so eingestellt wird, daß an deren Oberflächen diejenige Menge von in der Dampfphase befindlicher Behandlungsflüssigkeit kondensiert, daß in den Behandlungskammern ein gewünschter Austausch von Behandlungsflüssigkeit erfolgt.

Die Wahl der Oberflächentemperatur der in den Kammern befindlichen Behandlungsflüssigkeiten beeinflußt diejenige Menge von in der Dampfphase befindlicher Behandlungsflüssigkeit, die an den Oberflächen kondensiert. Es ist also möglich, durch die Wahl der Oberflächentemperatur zu beeinflussen, wieviel Behandlungsflüssigkeit kondensiert, und damit auch zu beeinflussen, wie stark der Austausch der in den Behandlungskammern befindlichen Behandlungsflüssigkeiten ist. Je nach Einsatz wird dieser Austausch recht · unterschiedlich sein, da die gewünschte Austauschhäufigkeit von vielen Parametern abhängig ist, wie z. B. der Menge des durch die Gegenstände eingeführten Wassers, der Anforderungen an die Reinheit der Bahandlungsflüssigkeit, der Größe der Kammern, und davon, wieviel Gegenstände je Zeiteinheit eingetaucht werden. Das Verfahren bietet darüber hinaus den Vorteil, daß mittels geeigneter Einstellung der Oberflächentemperatur der in den Kammern befindlichen Behandlungsflüssigkeiten bereits alle wesentlichen Verfahrensparameter gesteuert werden können.

Nach einer weiteren Ausgestaltung der Erfindung ist vorgesehen, daß die in den Bahandlungskammern befindlichen Behandlungsflüssigkeiten in 24 Stunden etwa zwei- bis zehnmal, vorzugsweise sechsmal, ausgetauscht werden. Bei einer ununterbrochen eingesetzten Anlage, die nach dem erfindungsgemäßen Verfahren arbeitet, hat es sich als vorteilhaft erwiesen, in ca. 24 Stunden die Behandlungsflüssigkeiten etwa zwei- bis zehnmal auszutauschen. Als besonders geeignet hat sich ein Austausch von etwa sechsmal je 24 Stunden erwiesen.

Nach einer weiteren Ausgestaltung der Erfindung ist vorgesehen, daß von den Oberflächen der in den Behandlungskammern befindlichen Behandlungsflüssigkeit Wasser und/oder mit Wasser verunreinigte Behandlungsflüssigkeit mittels Abströmeinrichtungen wenigstens einem Wasserabscheider zugeführt und anschließend in einen Vorratstank geleitet wird, von dem aus es mittels einer Pumpe der Verdampfungskammer zugeführt und dort verdampft wird.

Da das Wasser bzw. die mit Wasser verunreinigte Behandlungsflüssigkeit ein geringeres spezifisches Gewicht hat als die nicht verunreinigte Behandlungsflüssigkeit, sammelt sich das Wasser bzw. die mit Wasser verunreinigte Behandlungsflüssigkeit an der Oberfläche der in den Behandlungskammern befindlichen Flüssigkeiten an. Von dort aus wird sie mittels Abströmeinrichtungen einem bekannten, nach dem Schwerkraftprinzip arbeitenden Wasserabscheider zugeführt. Anschließend wird die Behandlungsflüssigkeit in einen Vorratstank geleitet, der so gestaltet ist, daß nicht laufend während des Verfahrens verloren gehende Behandlungsflüssigkeit ersetzt werden muß, sondern daß vielmehr ein Ersetzen der Behandlungsflüssigkeit in unregelmäßigen· Abständen genügt. Von dem Vorratstank aus wird die Behandlungsflüssigkeit einer Vorrichtung zugeführt, in der sie wieder verdampft wird.

Nach einer weiteren Ausgestaltung der Erfindung ist vorgesehen, daß die in der Dampfphase befindliche Behandlungsflüssigkeit in einem abgegrenzten Raum gehalten wird, der eine Kältefalle aufweist, von der aus die dort kondensierte, mit Wasser verunreinigte Behandlungsflüssigkeit einem Wasserabscheider und anschließend wenigstens einer Behandlungskammer zugeführt wird.

Mittels einer solchen Kältefalle wird nicht nur erreicht, daß der Raum, in dem sich in der Dampfphase befindliche Behandlungsflüssigkeit befindet, nach oben abgegrenzt wird, sondern es wird auch vermieden, daß von außen Luftfeuchtigkeit in diesen Raum eindringt. Es hat sich erwiesen, daß die Temperatur der Kältefalle sowohl oberwie auch unterhalb des Taupunktes der Luft liegen kann. In beiden Fällen ist eine einwandfreie Funktion gewährleistet.

Wie oben bereits erläutert, schlägt sich in die Behandlungsflüssigkeit durch die eingetauchten Gegenstände eingeführtes Wasser nach der später erfolgten Verdampfung der Behandlungsflüssigkeit infolge der eingestellten Temperaturverhältnisse nicht an den Oberflächen der in den Kammern befindlichen Behandlungsflüssigkeiten nieder. Dies führt dazu, daß das eingebrachte Wasser sich fast ausschließlich an der Kältefalle niederschlägt. Es ist hier also erforderlich, das Wasser von dem Kältemittel zu trennen. Da sich das Wasser fast ausschließlich an der Kältefalle sammelt, sammeln sich hier also relativ große Mengen an. Dies führt dazu, daß sich relativ große Wassertropfen bilden und so kaum eine Emulsionsbildung stattfindet.

Nach dem erfindungsgemäßen Verfahren wird also einerseits vermieden, daß Wasser direkt wieder zusammen mit Behandlungsflüssigkeit in die Behandlungskammern zurückgeführt wird. Zum anderen wird das in die Anlage durch die Luftfeuchtigkeit eingebrachte Wasser an möglichst einer Stelle konzentriert kondensiert, nämlich an der Kältefalle. Infolge der relativ großen Wassermengen, die dort kondensieren, ist eine relativ einfache Trennung des Wasser von der Behandlungsflüssigkeit möglich.

Nach einer weiteren Ausgestaltung der Erfindung ist vorgesehen, daß die Behandlungsflüssigkeit in dem oder den Wasserabscheidern gekühlt wird und so die gewünschten Temperaturen der Behandlungsflüssigkeiten in den Behandlungskammern eingestellt werden.

Mittels ·der Herunterkühlung der Behandlungsflüssigkeit in den Wasserabscheidern werden zwei Vorteile erreicht. Zum einen wird auf diese Weise die in den Behandlungskammern gewünschte Oberflächentemperatur der Behandlungsflüssigkeit eingestellt. Zum anderen führt eine Absenkung der Temperatur der Behandlungsflüssigkeit in den Wasserabscheidern dazu, daß das Wasser sich leichter von der Behandlungsflüssigkeit trennen läßt.

Nach einer weiteren Ausgestaltung der Erfindung ist vorgesehen, daß die in der Dampfphase befindliche Behandlungsflüssigkeit auch zur Kondensatspülung eines aus einer Behandlungskammer herausgehobenen Gegenstandes eingesetzt wird.

Da die in den Behandlungskammern befindliche, flüssige Behandlungsflüssigkeit eine Temperatur unterhalb der Verdampfungstemperatur hat, kann die in der Dampfphase befindliche Behandlungsflüssigkeit auch zu einer Kondensatspülung eingesetzt werden. Ein aus den in den Behandlungskammern befindlichen Behandlungsflüssigkeiten herausgehobener Gegenstand wird nach genügend langem Aufenthalt in den Kammern etwa die Temperatur der flüssigen Behandlungsflüssigkeit erreicht haben, also eine solche Temperatur, die unterhalb der Verdampfungstemperatur liegt. Infolgedessen schlägt sich nach dem Herausheben des Gegenstandes die in der Dampfphase befindliche Behandlungsflüssigkeit als Kondensat an der Oberfläche des Gegenstandes nieder und spült diesen ab. Auf diese Weise wird die in der Dampfphase befindliche Behandlungsflüssigkeit zweifach genutzt, nämlich zum einen zum Auffüllen der in den Behandlungskammern befindlichen Behandlungsflüssigkeiten und zum anderen zur Kondensatspülung der aus den in den Kammern befindlichen Behandlungsflüssigkeiten herausgehobenen Gegenstände.

Nach einer weiteren Ausgestaltung der Erfindung ist vorge sehen, daß in der Behandlungsflüssigkeit der Behandlungskammer, in die die Gegenstände zuerst eingeführt werden, Ultraschallschwinger vorgesehen sind.

Die Entfernung von Wasser von in die Behandlungskammern eingetauchten Gegenständen kann durch Ultraschallschwinger noch verbessert werden, die in derjenigen Behandlungskammer vorgesehen sind, in die die Gegenstände zuerst eingeführt werden.

Nach einer weiteren Ausgestaltung der Erfindung ist vorgesehen, daß die Ultraschallschwinger nach dem Einführen von Gegenständen erst eingeschaltet werden, wenn ein großer Teil des Wassers, das den Oberflächen der Gegenstände anhaftete, bereits an die Oberfläche der Behandlungsflüssigkeit gelangt ist.

Es hat sich als vorteilhaft erwiesen, von der Behandlungsflüssigkeit verdrängtes bzw. aufgenommenes Wasser sich zunächst einmal in der Behandlungskammer nach oben absetzen und von den Querstrom-Strömeinrichtungen abführen zu lassen. Erst dann werden die Ultraschallschwinger eingeschaltet. Damit wird vermieden, daß das von den Oberflächen der Gegenstände durch das Eintauchen entfernte Wasser durch die Ultraschallschwingungen mit der Behandlungsflüssigkeit emulgiert, die Zwangsströmung des Wassers zerstört wird und dieses Wasser die Dampfphase vernebelt.

Nach einer weiteren Ausgestaltung der Erfindung ist vorgesehen, daß die Gegenstände im Ultraschallfeld langsam bewegt werden. Da Inhomogenitäten des Ultraschallfeldes in der Kammer sich kaum vermeiden lassen, ist es vorteilhaft, die Gegenstände in dem Ultraschallfeld langsam zu bewegen, um auf diese Weise die Inhomogenitäten auszugleichen.

Nach einer weiteren Ausgestaltung der Erfindung ist vorgesehen, daß als Behandlungsflüssigkeit ein Gemisch aus Fluor-Kohlenwasserstoff und Alkohol eingesetzt wird.

Fluor-Kohlenwasserstoff ist als Behandlungsflüssigkeit insbesondere deshalb geeignet, da dieser ein höheres spezifisches Gewicht hat als Wasser und so das Wasser von den Oberflächen der zu behandelnden Gegenstände verdrängt. Wird dem Fluor-Kohlenwasserstoff Alkohol beigefügt, so wird die Entfernung der Feuchtigkeit von den Oberflächen der zu behandelnden Gegenstände dadurch unterstützt, daß der Alkohol Wasser aufnimmt. Geeignete Alkohole sind beispielsweise Methanol, Aethanol, Isopropanol, n-Propanol und n-Buthanol.

Ein solches Gemisch aus Fluor-Kohlenwasserstoff und Alkohol wird in der Verdampfungskammer in die Dampfphase übergeführt. Dies hat zur Folge, daß sowohl das in der Dampfphase befindliche Gemisch, wie auch das in den Kammern befindliche, kondensierte Gemisch eine wenigstens ungefähr azeotrope Zusammensetzung hat. Infolge der Verdampfung stellt sich dieses azeotrope Gemisch automatisch ein, und zwar unabhängig davon, in welchem Mischungsverhältnis sich der Fluor-Kohlenwasserstoff und der Alkohol in der Verdampfungskammer befinden. Es muß lediglich sichergestellt sein, daß sowohl Fluor-Kohlenwasserstoff, wie auch Alkohol in der Kammer vorhanden ist. Damit bietet das Verfahren einen weiteren großen Vorteil, nämlich eine automatische Einstellung einer bestimmten Konzentration des Behandlungsgemisches.

Entgegen einem in der Fachwelt weit verbreiteten Vorurteil hat sich erwiesen, daß eine azeotrope Konzentration eines Fluor-Kohlenwasserstoff-und Alkohol-Gemisches sich gut eignet, in der oben beschriebenen Weise Wasser von einzutauchenden Gegenständen zu entfernen. Die Ursache hierfür liegt u. a. darin, daß es bei Einsatz des erfindugnsgemäßen Verfahrens gelingt, die Behandlungsflüssigkeiten in den Kammern sehr wasserarm zu halten.

Ein Ausführungsbeispiel der Erfindung wird anhand der Zeichnungen näher erläutert. Es zeigen:

Fig. I eine Trocknungsvorrichtung im Schnitt, die nach dem Verfahren nach der Erfindung arbeitet,

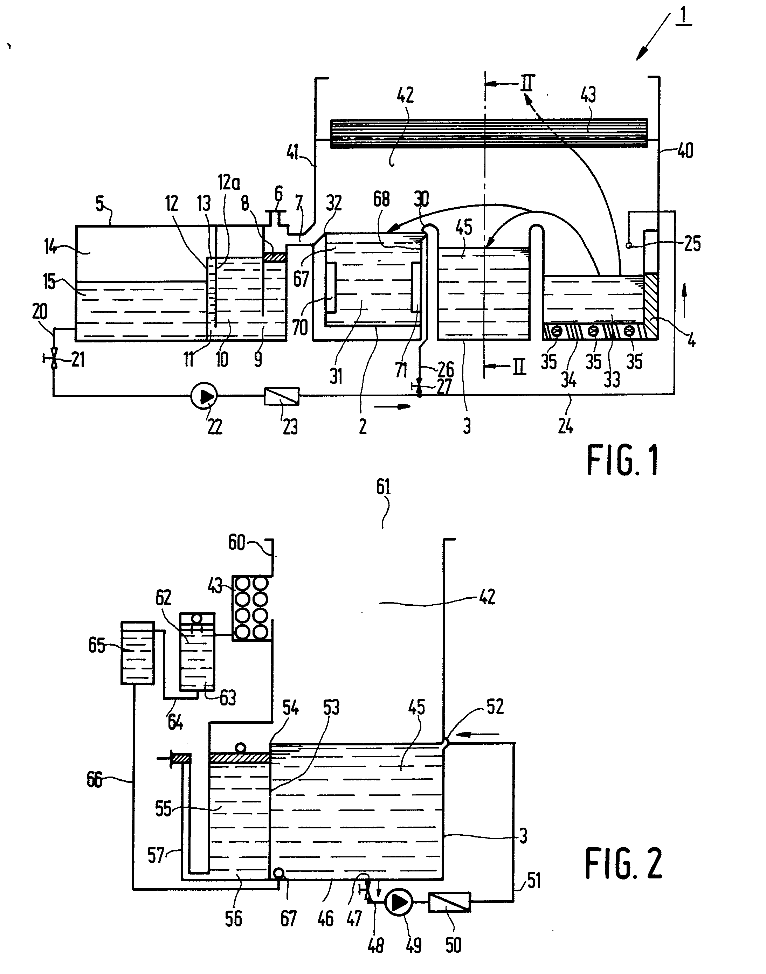

Fig. 2 einen Schnitt entlang der Linie II-II der Anlage nach Fig. I.

Eine in Fig. I im Schnitt dargestellte Vorrichtung zum Trocknen von plattenförmigen Informationsträgern (Compact-Discs) arbeitet nach dem Verfahren zum Auffüllen und/oder Aufbereiten von wasserverdrängenden Behandlungsflüssigkeiten. Die Vorrichtung I weist eine erste Behandlungskammer 2 und eine zweite Behandlungskammer 3 auf, die nebeneinander angeordnet sind. Neben der zweiten Behandlungskammer 3 befindet sich eine Verdampfungskammer 4. Neben der ersten Behandlungskammer 2 ist ein Vorratstank 5 angeordnet. Der Vorratstank 5 weist einen Einfüllstützen 6 auf. Dieser Einfüllstutzen 6 sowie ein Zulaufrohr 7 führen zu einem in dem Vorratstank 5 angeordneten Wasserabscheider 8. Dieser Wasserabscheider 8 arbeitet nach dem Schwerkraftprinzip, d. h. das gegenüber der Behandlungsflüssigkeit leichtere Wasser setzt sich oben ab und wird in in der Figur nicht dargestellter Weise abgeführt. Durch eine unten angeordnete Öffnung 9 wird dem Wasserabscheider von Wasser gereinigte Behandlungsflüssigkeit entnommen und einem weiteren Wasserabscheider I0 zugeführt. In dem Wasserabscheider I0 ist eine Kühlvorrichtung I0a vorgesehen. Diese dient dazu, den Wasserabscheider verlassende, von Wasser getrennte Behandlungsflüssigkeit herunterzukühlen. Durch eine Öffnung II dieses Wasserabscheiders I0 fließt Behandlungsflüssigkeit zwischen Trennwänden I2 und I2a und eine obere Auslauföffnung I3 in eine Vorratskammer I4. In dieser Vorratskammer I4 befindet sich von Wasser gereinigte Behandlungsflüssigkeit I5. Im unteren Bereich der Vorratskammer I4 wird dieser mittels einer Rohrleitung 20 Behandlungsflüssigkeit entnommen. Im Verlaufe dieser Rohrleitung 20 strömt die Behandlungsflüssigkeit zunächst durch einen Durchflußregler 2I, mit dem die Durchflußmenge regelbar ist. Anschließend wird die Behandlungsflüssigkeit mittels einer Pumpe 22 durch ein Filter 23 gepumpt. Dieses Filter 23 ist ein mechanisches Filter und dient dazu, evtl. in der Behandlungsflüssigkeit zurückgebliebene feste Teilchen zurückzuhalten. Hinter dem Filter 23 führt eine Rohrleitung 24 zu einer Auslauföffnung 25, die oberhalb der Verdampfungskammer 4 vorgesehen ist, so daß aus der Öffnung 25 austretende Behandlungsflüssigkeit in die Verdampfungskammer 4 einfließt. Zum anderen führt von dem Filter 23 eine weitere Rohrleitung 26, die einen der Regelung der Durchflußmenge dienenden Durchflußregler 27 aufweist, zu einer Abströmeinrichtung 30. Diese Abströmeinrichtung 30 ist im oberen Bereich der Behandlungskammer 2 so angeordnet, daß sie im Bereich der Oberfläche einer in der Behandlungskammer 2 befindlichen, flüssigen Behandlungsflüssigkeit 3I ange ordnet ist. Die Abströmeinrichtung 30 arbeitet in der Weise, daß die durch das Rohr 23 in die Abströmeinrichtung 30 gepumpte Flüssigkeit über die Oberfläche der in der Kammer 2 stehenden Behandlungsflüssigkeit 3l gedrückt wird, so daß an der Oberfläche der Behandlungsflüssigkeit befindliches Wasser bzw. mit Wasser verunreinigte Behandlungsflüssigkeit auf der gegenüberliegenden Seite der Behandlungskammer 2 über eine Überlaufkante 32 in das Zulaufrohr 7 des Vorratstanks 5 fließt und von dort aus in den Wasserabscheider 8 gelangt. Der Durchflußregler 27 in der Rohrleitung 26 ist dabei so einzustellen, daß in der Behandlungskammer 2 an die Oberfläche tretendes Wasser mittels der Abströmeinrichtung 30 möglichst vollständig über die Überlaufkante 32 in den Vorratstank 5 geleitet wird.

Die mittels der Pumpe 22 über die Rohrleitung 24 und die Auslauföffnung 25 in die Verdampfungskammer 4 geleitete Behandlungsflüssigkeit sammelt sich im unteren Bereich 33 der Verdampfungskammer 4 an. Unterhalb des Bodens 34 der Verdampfungskammer sind Heizrohre 35 vorgesehen, welche dazu dienen, die in der Behandlungskammer befindliche, flüssige Behandlungsflüssigkeit indirekt zu beheizen und so zu verdampfen. Die Heizrohre 35 können dabei in verschiedener Weise ausgeführt sein; es muß jedoch in jedem Falle eine solche Heizleistung zur Verfügung stehen, daß die in der Behandlungskammer 4 stehende Behandlungsflüssigkeit verdampft wird. Oberhalb der Behandlungskammern 2 und 3 und der Verdampfungskammer 4, die nebeneinander angeordnet sind, befinden sich eine zu den Seiten hin mittels Wänden 40 und 4l abgeschlossenen Raum 42. Dieser Raum 42 ist nach oben hin abgegrenzt mittels einer Kältefalle 43.

Die Behandlungskammer 3, der Raum 42 und die Kältefalle 43 sind in Fig. 2 im Schnitt entlang der Linie II-II dargestellt. Eine in der Behandlungskammer 3 stehende Behandlungsflüssigkeit 45 wird im Bodenbereich 46 der Behandlungskammer 3 über eine Öffnung 47 und einen Durchflußregler 48 mittels einer Pumpe 49 durch ein Filter 50 gepumpt. Dieses Filter hat die gleich Funktion wie das Filter 23; es dient der Herausfilterung von Festpartikeln. Hinter dem Filter 50 wird die systemresistente Fluor-Kohlenwasserstoff-(FKW)-Behandlungsflüssigkeit über ein Rohrleitungssystem 5l zu einer Abströmeinrichtung 52 geführt. Diese Abströmeinrichtung arbeitet entsprechend der Abströmeinrichtung 30 der Behandlungskammer 2. Die mittels der Abströmeinrichtung 52 über die Oberfläche gepumpte verunreinigte Behandlungsflüssigkeit wird auf einer der Abströmeinrichtung 52 gegenüberliegenden Seite 53 der Behandlungskammer 3 über einen Überlauf 54 einem Wasserabscheider 55 zugeführt. Dieser Wasserabscheider 55 arbeitet nach dem gleichen Prinzip wie der Wasserabscheider 8 des Vorratstanks 5. Vom Bodenbereich 56 des Wasserabscheiders 55 wird von Wasser gereinigte Behandlungsflüssigkeit über ein Rohrleitungssystem 57 in nicht dargestellter Weise der in Fig. l dargestellten Verdampfungskammer 4 zugeführt. Die in dem Wasserabscheider abgetrennte wässrige Phase der Behandlungsflüssigkeit wird dem Wasserabscheider 8 zugeführt.

In dem Raum 42 befindlicher Dampf einer Behandlungsflüssigkeit wird in seiner Ausdehnung nach oben hin abgegrenzt mittels der an einer Seite 60 einer oberen Öffnung 6l des Raumes 42 angeordneten Kältefalle 43. Der in der Kältefalle 43 kondensierende Dampf bzw. Wasserdampf wird einem Wasserabscheider 62 zugeführt, der wie die Wasserabscheider 55 und 8 nach dem Schwerkraftprinzip arbeitet. In dem Wasserabscheider 62 ist eine Kühlvorrichtung 62a vorgesehen, mittels derer den Schwerkraftabscheider verlassende, von Wasser gerinigte Behandlungsflüssigkeit herabgekühlt wird. Eine dem Wasserabscheider 62 in seinem Bodenbereich 63 entnommene, von Wasser gereinigte Behandlungsflüssigkeit wird über eine Rohrleitung 64 einem Tank 65 zugeführt. Dieser Tank 65 dient als Zwischenspeicher. Vom Bodenbereich des Tankes 65 wird die in dem Tank 65 stehende, flüssige Behandlungsflüssigkeit über eine Rohrleitung 66 der Behandlungskammer 3 zugeführt. Dabei gelangt die Behandlungsflüssigkeit über eine Öffnung 67 im Bodenbereich 46 der Behandlungskammer 3 in die dort bereits befindliche Behandlungsflüssigkeit 45.

Die in den Fig. l und 2 dargestellte Anlage arbeitet in der im folgenden beschriebenen Weise nach dem Verfahren zum Auffüllen und/oder Aufbereiten von Behandlungsflüssigkeiten. Die in der Verdampfungskammer 4 verdampfte Behandlungsflüssigkeit sammelt sich in dem Raum 42 oberhalb der Behandlungskammern 2 und 3 und der Verdampfungskammer 4 an. Dieser Raum 42 ist für den Dampf mittels der Kältefalle 43 nach oben abgegrenzt. Die in den Behandlungskammern 2 und 3 befindlichen, flüssigen Behandlungsflüssigkeiten 3l und 45 weisen eine Temperatur auf, die unter ihrem Verdampfungspunkt liegt. Dies führt dazu, daß der oberhalb der Kammern 2 und 3 befindliche Dampf der gleichen Flüssigkeit an den Oberflächen der in den Kammern 2 und 3 stehenden, flüssigen Behandlungsflüssigkeiten 3l und 45 kondensiert. Die Oberflächen der in den Kammern 2 und 3 stehenden Flüssigkeiten werden durch je eine Abströmeinrichtung 30 bzw. 52 von Wasser bzw. mit Wasser verunreinigte Behandlungsflüssigkeit, das durch in die Kammern eingetauchte Gegenstände in diese gelangt, befreit. Die von der Abströmeinrichtung 30 über die Überlaufkante 32 in den Wasserabscheider 8 einlaufende, mit Wasser verunreinigte Behandlungsflüssigkeit wird in diesem ersten Wasserabscheider von einem großen Teil des Wassers getrennt. Anschließend durchläuft die Behandlungsflüssigkeit einen weiteren Wasserabscheider 10, in dem sie mittels der Kühlvorrichtung 10a gekühlt wird. Es wird hier bereits eine geeignete Temperatur der Behandlungsflüssigkeit in der Weise eingestellt, daß die anschließend über eine Pumpe 22 und ein Filer 23 der Abströmeinrichtung 30 wieder zugeführte Behandlungsflüssigkeit die für die Oberfläche der in der Kammer 2 befindlichen Behandlungsflüssigkeit gewünschte Temperatur hat. Das Herunterkühlen der Behandlungssflüssigkeit in der Kammer 10 hat darüber hinaus den Vorteil, daß die Löslichkeit des Fluor-Kohlenwasserstoffes für Wasser herabgesetzt wird, so dßa das Wasser leichter vom Fluor-Kohlenwasserstoff getrennt werden kann. In ähnlicher Weise arbeitet der Wasserabscheider 62. Die in diesem Wasserabscheider vorgesehene Kühlvorrichtung 62a kühlt das Wasser auf eine solche Temperatur herab, daß sich an der Oberfläche der in der Kammer 3 befindlichen Behandlungsflüssigkeit 45 die gewünschte Temperatur einstellt. Mittels der Kühlvorrichtungen 10a und 62a werden also die Oberflächentemperaturen der in den Kammern 2 und 3 befindlichen Behandlungsflüssigkeiten 31 und 45 eingestellt. Dies geschieht in der oben erläuterten Weise so, daß ein gewünschter Austausch der Behandlungsflüssigkeiten in den Kammern stattfindet.

Auf diese Weise ist ein Kreislauf der Behandlungsflüssigkeit gegeben, in dessen Verlauf die Behandlungsflüssigkeit immer wieder in der Verdampfungskammer 4 verdampft wird und anschließend an den Oberflächen der flüssigen Behandlungsflüssigkeit 31 bzw. 45 kondensiert. Dies führt dazu, daß die Behandlungsflüssigkeit immer wieder über die Dampfphase geführt und damit gereinigt wird. Darüber hinaus wird die Behandlungsflüssigkeit immer wieder von in sie eingeführtem Wasser getrennt, wobei eine Emulsionsbildung zwischen Behandlungsflüssigkeit und Wasser vermieden wird. Auch wieder aufzufüllende oder über den Stutzen 6 des Vorratstanks 5 neu eingefüllte Behandlungsflüssigkeit wird dabei in gleicher Weise gereinigt, da sie zunächst über den Vorratstank und das Filter 23 zu der Verdampfungskammer 4 gelangt, wo sie verdampft wird. Erst im anschließend wieder kondensierten Zustand gelangt die Behandlungsflüssigkeit in Kontakt mit den zu trocknenden Gegenständen. Auch bei hohen Anforderungen an die Reinheit der Behandlungsflüssigkeit in den Kammer 2 und 3 kann zur Erstbefüllung der Anlage eine Behandlungsflüssigkeit verwendet werden, welche diesen Reinheitsanforderungen nicht genügt. In einem solchen Falle wird die Anlage zunächst mit der Behandlungsflüssigkeit aufgefüllt und so lange im stationären Zustand, d. h. in dem Zustand, in dem der in der Verdampfungskammer 4 verdampfte Dampf an den Oberflächen der in den Behandlungskammern 2 und 3 stehenden Behandlungsflüssigkeiten 31 und 45 kondensiert, betrieben, bis die in den Kammern 2 und 3 befindliche Behandlungsflüssigkeit in genügender Weise gereinigt ist. Darüber hinaus ist während des Betriebs, in dem die Behandlungsflüssigkeit immer wieder durch in sie eingetauchte Gegenstände verunreinigt wird, ein nur relativ seltener Austausch der Behandlungsflüssigkeit erforderlich, da diese durch die zyklische Überführung in die Dampfphase immer wieder gereinigt wird. Die Reinigungswirkung des Verfahrens ist dabei so gut, daß bezüglich der Eindickungsrückstände in der Reinigungsflüssigkeit ein Reinheitsgrad in der Größenordnung von ppb (parts per billion) erreicht wird.

Als Behandlungsflüssigkeit hat sich ein Gemisch aus Fluor-Kohlenwasserstoff und Isopropanol als vorteilhaft erwiesen. Die Alkohol-Konzentration des in der Kammer 4 befindlichen, flüssigen Gemisches ist dabei von untergeordneter Bedeutung, sollte jedoch in jedem Falle so gewählt sein, daß der Dampf des Gemisches und das in den Kammern 2 und 3 befindliche, kondensierte Gemisch azeotrop ist. Eine azeotrope Konzentration des Gemisches ist dabei nach den praktischen Erfahrungen zum Trocknen von Gegenständen in den Kammern 2 und 3 ausreichend. Zum Trocknen werden die Gegenstände zunächst in das in der Kammer 2 stehende flüssige Behandlungsgemisch 31 eingetaucht. Nach dem Eintauchen der Gegenstände in die Flüssigkeit steigt ein großer Teil des an den Gegenständen haftenden Wassers an die Oberfläche und wird dort mittels der Abströmeinrichtung 30 über den Überlauf 32 zum Wasserabscheider 8 im Vorratstank 5 geführt. Das Wasser steigt an die Oberfläche des in der Kammer stehenden Behandlungsgemisches 31, da dieses ein höheres spezifisches Gewicht als Wasser hat. Zum anderen werden durch den in dem Gemisch enthaltenen Alkohol zusätzlich dem Gegenstand anhaftende Wasserreste aufgenommen und infolge des geringeren spezifischen Gewichts des Wassers gegenüber der Behandlungsflüssigkeit ebenfalls der Oberfläche zugeführt, von wo aus sie mittels der Abströmeinrichtung 30 über den Überlauf 32 abgeführt werden. Um nach diesem Vorgang den Gegenständen evtl. noch anhaftende Restfeuchtigkeit zu entfernen, können an zwei gegenüberliegenden Seiten 67 und 68 der Behandlungskammer 2 Ultraschall-Schwinger 70 und 71 vorgesehen sein, welche erst dann in Betrieb gesetzt werden, wenn der größte Teil des Wassers bereits an die Oberfläche gelangt ist und von dort mittels der Abströmeinrichtung 30 entfernt worden ist. Nach dem Einschalten der Ultraschall-Schwinger löst sich dann infolge der sich bildenden Turbulenzen der Behandlungsflüssigkeit nochmals etwas Wasser bzw. Restfeuchtigkeit von den Gegenständen und wird ebenfalls von der Oberfläche der Behandlungsflüssigkeit abgeführt. Um Inhomogenitäten der Energieverteilung des Ultraschallfeldes auszugleichen, wird ein eingetauchter Gegenstand langsam in dem Ultrallschallfeld hin und her bewegt, um eine gleichmäßige, spezifische Energie-Einbringung auf der Oberfläche sicherzustellen. Nachdem auch diese Restfeuchtigkeit weitestgehend von den Oberflächen des in den Figuren nicht dargestellten Gegenstandes entfernt worden ist, wird der Gegenstand aus der Behandlungskammer 2 gehoben und in den Raum 42 geführt, der mit Dampf der Behandlungsflüssigkeit angefüllt ist. Da der Gegenstand im wesentlichen die Temperatur der in der Behandlungskammer 2 befindlichen flüssigen Behandlungsflüssigkeit angenommen hat, ist er wenigstens einige Grade kälter als der Dampf der Behandlungsflüssigkeit in dem Raum 42. Infolgedessen kondensiert dieser Dampf an den Oberflächen des Gegenstandes. Auf diese Weise wird der Gegenstand nochmals mit der Behandlungsflüssigkeit abgespült. Anschließend wird der Gegenstand in die in der zweiten Behandlungskammer 3 befindliche Behandlungsflüssigkeit 45 eingetaucht. In dieser Behandlungskammer 3 wird der Gegenstand nun auf gleiche Weise nochmals von evtl. ihm noch anhaftendem Wasser befreit wie in der Kammer 2. Dies gelingt in der Behandlungskammer 3 noch vollständiger als in der Kammer 2, da in die Behandlungskammer 3 nur noch Gegenstände gelangen, welchen nur noch sehr wenig Restfeutchtigkeit anhaftet, so daß die in der Behandlungskammer 3 befindliche, flüssige Behandlungsflüssigkeit 45 nur noch sehr wenig durch Wasser verunreinigt ist. Nachdem der Gegenstand in der in der Behandlungskammer 3 stehenden flüssigen Behandlungsflüssigkeit 45 von der ihm evtl. noch anhaftenden Restfeuchtigkeit befreit worden ist, wird dieser aus der Flüssigkeit herausgehoben und in den Raum 42 geführt. Da auch das in der Kammer 3 befindliche flüssige Behandlungsgemisch 45 eine wenigstens einige Grade niedrigere Temperatur als der in dem Raum 42 befindliche Dampf des Gemisches hat, kondensiert dieser Dampf nach dem Herausheben des Gegenstandes aus der Kammer 3 an der Oberfläche des Gegenstandes. Auf diese Weise findet nochmals eine Kondensatspülung statt. Der Gegenstand wird nun langsam durch den Raum 42 nach oben geführt. Dabei erwärmt der Gegenstand sich, bis er nahezu die Dampftemperatur erreicht hat und kaum noch Dampf an seinen Oberflächen kondensiert. Der Gegenstand trocknet nun langsam ab und wird an der Kältefalle 43 vorbei durch die Öffnung 6l in die umgebende Luft geführt. Auf diese Weise trocknet der Gestand rückstandsfrei, d. h. ohne Trocknungsflecken ab. Die Verweilzeiten des zu trocknenden Gegenstandes in den Behandlungskammern bzw. in dem Dampf hängen von den jeweils gewählten Temperaturen und von der Wärmekapazität des Gegenstandes sowie der Geometrie des Objektes ab. Bei hoher Wärmekapazität des Gegenstandes wird eine jeweils höhere Verweildauer erforderlich sein.

**Ansprüche**

l. Verfahren zum Auffüllen und/oder Aufbereiten von wasserverdrängenden Behandlungsflüssigkeiten oder von Gemischen aus solchen und aus wasseraufnehmenden Flüssigkeiten in Behandlungskammern zum Entfernen von Wasser, das Oberflächen von in die Behandlungsflüssigkeiten einzutauchenden Gegenständen aus Glas, Keramik, Nickel, Kupfer, rostfreiem Stahl oder Kunststoff, wie beispielsweise plattenförmige Informationsträger, anhaftet, dadurch gekennzeichnet, daß die Oberflächen der in den Kammern befindlichen Behandlungsflüssigkeiten auf einer derartigen Temperatur gehalten werden, daß eine oberhalb dieser Oberflächen befindliche, in die Dampfphase übergeführte Behandlungsflüssigkeit der gleichen Art an den Oberflächen kondensiert und den Kammern auf diese Weise laufend aufbereitete, wasserarme Behandlungsflüssigkeit zugeführt wird.

2. Verfahren nach Anspruch l, dadurch gekennzeichnet, daß die an den Oberflächen kondensierende dampfförmige Behandlungsflüssigkeit mittels einer Verdampfungskammer durch Erhitzen in die Dampfphase übergeführt wird.

3. Verfahren nach Anspruch l und/oder 2, dadurch gekennzeichnet, daß die Oberflächentemperatur der in den Kammern befindlichen Behandlungsflüssigkeiten unterhalb deren Verdampfungstemperatur und oberhalb des Taupunktes der Luftfeuchtigkeit gehalten wird.

4. Verfahren nach Anspruch 3, dadurch gekennzeichnet, daß die in den Behandlungskammern befindlichen Behandlungsflüssigkeiten auf einer Temperatur von 7°C bis l5°C unterhalb ihres Siedepunktes gehalten wird.

5. Verfahren nach Anspruch 3, dadurch gekennzeichnet, daß die Oberflächentemperatur der in den Kammern befindlichen Behandlungsflüssigkeiten so eingestellt wird, daß an deren Oberflächen diejenige Menge von in der Dampfphase befindlicher Behandlungsflüssigkeit kondensiert, daß in den Behandlungskammern ein gewünschter Austausch von Behandlungsflüssigkeit erfolgt.

6. Verfahren nach Anspruch 5, dadurch gekennzeichnet, daß die in den Behandlunskammern befindlichen Behandlungsflüssigkeiten in 24 Stunden etwa zwei-bis zehnmal, vorzugsweise sechsmal, ausgetauscht werden.

7. Verfahren nach einem oder mehreren der Ansprüche I bis 6, dadurch gekennzeichnet, daß von den Oberflächen der in den Behandlungskammern befindlichen Behandlungsflüssigkeit Wasser und/oder mit Wasser verunreinigte Behandlungsflüssigkeit mittels Abströmeinrichtungen wenigstens einem Wasserabscheider zugeführt und anschließend in einen Vorratstank geleitet wird, von dem aus es mittels einer Pumpe zugeführt und dort in der Verdampfungskammer verdampft wird.

8. Verfahren nach einem oder mehreren der Ansprüche I bis 7, dadurch gekennzeichnet, daß die in der Dampfphase befindliche Behandlungsflüssigkeit in einem abgegrenzten Raum gehalten wird, der eine Kältefalle aufweist, von der aus die dort kondensierte, mit Wasser verunreinigte Behandlungsflüssigkeit einem Wasserabscheider und anschließend wenigstens einer Behandlungskammer zugeführt wird.

9. Verfahren nach Anspruch 7 und/oder 8, dadurch gekennzeichnet, daß die Behandlungsflüssigkeit in dem oder den Wasserabscheidern gekühlt wird und so die gewünschten Temperaturen der Behandlungsflüssigkeiten in den Behandlungskammern eingestellt werden.

I0. Verfahren nach einem oder mehreren der Ansprüche I bis 9, dadurch gekennzeichnet, daß die in der Dampfphase befindliche Behandlungsflüssigkeit auch zur Kondenatspülung eines aus einer Behandlungskammer herausgehobenen Gegenstandes eingesetzt wird.

II. Verfahren nach einem oder mehreren der Ansprüche I bis I0, dadurch gekennzeichnet, daß in der Behandlungsflüssigkeit der Behandlungskammer, in die die Gegenstände zuerst eingeführt werden, Ultraschallschwinger vorgesehen sind.

I2. Verfahren nach Anspruch II, dadurch gekennzeichnet, daß die Ultraschallschwinger nach dem Einführen von Gegenständen erst eingeschaltet werden, wenn ein großer Teil des Wassers, das den Oberflächen der Gegenstände anhaftete, bereits an die Oberfläche der Behandlungsflüssigkeit gelangt ist.

I3. Verfahren nach Anspruch II oder I2, dadurch gekennzeichnet, daß die Gegenstände in dem Ultraschallfeld langsam bewegt werden.

I4. Verfahren nach einem oder mehreren der Ansprüche I bis I3, dadurch gekennzeichnet, daß als Behandlungsflüssigkeit ein Gemisch aus Fluor-Kohlenwasserstoff und Alkohol eingesetzt wird.

I5. Verfahren nach Anspruch I4, dadurch gekennzeichnet, daß die Oberflächentemperatur des in den Kammern befindlichen Fluor-Kohlenwasserstoff/Isopropanol-Gemisches auf etwa 35°C gehalten werden.

FIG. 1

FIG. 2

Europäisches
Patentamt

**EUROPÄISCHER RECHERCHENBERICHT**

Nummer der Anmeldung

EP 87 20 0014

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-A-2 301 357 (ALLIED CHEMICAL CORP.)<br><br>* Patentansprüche 1-3,6,9,12,14,15; Figuren 9,10; Seite 31, Zeile 12 - Seite 37, Zeile 16 * | 1-5,8 10,11 14,15 | B 01 D 12/00 |
| Y | * Seite 31, Zeile 11 - Seite 37, Zeile 16; Figuren 9,10 * | 7,9 | |
| Y | EP-A-0 017 459 (DAIKIN KOGYO CO., LTD)<br>* Patentansprüche 1,2,4; Figur 4; Seite 10, Zeile 23 - Seite 13, Zeile 4 * | 7 | |
| Y | FR-A-2 128 975 (PRODUITS CHIMIQUES PECHINEY-SAINT-GOBAIN)<br>* Figur 1; Seite 3, Zeile 31 - Seite 4, Zeile 23 * | 9 | RECHERCHIERTE SACHGEBIETE (Int. Cl.4)<br><br>B 01 D 12/00<br>C 23 G 5/00 |
| A | DE-A-3 142 338 (W. BIESTERFELD)<br>* Patentansprüche 1-12; Figur 1 * | 1-15 | |

Der vorliegende Recherchenbericht wurde für alle Patentansprüche erstellt.

| Recherchenort | Abschlußdatum der Recherche | Prüfer |
|---|---|---|
| DEN HAAG | 24-04-1987 | TORFS F.M.G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82